# EUROPÄISCHE PATENTSCHRIFT

(11) **EP 1 440 250 B1**
(45) Veröffentlichungstag und Bekanntmachung des Hinweises auf die Patenterteilung: **05.04.2006**
(21) Anmeldenummer: 02779185.4
(22) Anmeldetag: 29.10.2002
(51) Int. Cl.: F16F 13/26, F16F 13/10, F16F 13/14

(54) **HYDRAULISCH DÄMPFENDES GUMMILAGER**
HYDRAULICALLY DAMPING RUBBER BEARING
PALIER EN CAOUTCHOUC PROVOQUANT UN AMORTISSEMENT HYDRAULIQUE

(30) Priorität: 31.10.2001 DE 10153220
(43) Veröffentlichungstag der Anmeldung: 28.07.2004
(73) Patentinhaber: ZF Lemförder Metallwaren AG, 49441 Lemförde (DE)
(72) Erfinder: SIEMER, Hubert, 49413 Dinklage (DE); WILLERT, Claudia, 49439 Steinfeld (DE); DUISEN, Frank, 49401 Damme (DE); VOSSEL, Andreas, 49086 Osnabrück (DE)
(86) Internationale Anmeldenummer: PCT/DE2002/004035
(87) Internationale Veröffentlichungsnummer: WO 2003/038301

(56) Entgegenhaltungen:
- DE-C- 19 919 876
- PATENT ABSTRACTS OF JAPAN vol. 017, no. 465 (M-1468), 25. August 1993 (1993-08-25) -& JP 05 106681 A (MARUGO RUBBER KOGYO KK), 27. April 1993 (1993-04-27)

## Beschreibung

Die Erfindung betrifft ein hydraulisch dämpfendes Gummilager mit veränderbarer Kanallänge, welches ein elastomeres Federelement beziehungsweise Dämpfungsglied, mindestens zwei Kammern zur Aufnahme eines fluiden Dämpfungsmittels und einen Kanalträger mit einem darin ausgebildeten, die Kammern strömungsleitend verbindenden Kanal zur Zirkulation des Dämpfungsmittels aufweist.
Gummilager werden insbesondere im Automobilbau, beispielsweise zur Lagerung von Lenkern, Stabilisatoren oder des Fahrzeugmotors, vielfältig und im Hinblick auf den jeweiligen konkreten Einsatzzweck in unterschiedlichsten Bauformen eingesetzt. Unterschieden werden dabei im Wesentlichen Buchsenlager zur Bedämpfung radial eingetragener Kräfte und Motorlager, welche vornehmlich zur Aufnahme axial eingetragener Kräfte ausgebildet sind. Entsprechend dem jeweiligen Einsatzzweck gilt es das Dämpfungsverhalten der Lager einzustellen. Neben konstruktiven Maßnahmen, betreffend die Formgebung und die Materialzusammensetzung des elastomeren Dämpfungsgliedes ist es bekannt, das Dämpfungsverhalten zusätzlich durch ein vom Lagerkörper aufgenommenes fluides Dämpfungsmittel zu beeinflussen beziehungsweise zu unterstützen. Im Lagerkörper eines solchen hydraulisch dämpfenden Lagers (Hydrolager) sind zu diesem Zweck Kammern und mindestens ein die Kammern verbindender und so eine Zirkulation des Dämpfüngsminets ermöglichender Kanal vorgesehen. Das Dämpfungsverhalten des Lagers wird dabei neben der Beschaffenheit des elastomeren Dämpfungsglieds wesentlich durch das Volumen des Kanals, also durch dessen Länge und Querschnitt beeinflusst. Nach dem Stand der Technik muss allerdings bislang im Allgemeinen für jede geometrische Variation des Kanals ein neues Lager aufgebaut werden. Das fertige Bauteil kann dabei hinsichtlich von Lage und Maximum der Dämpfung nur eine Einstellung wiedergeben. Aufgrund des vielseitigen Einsatzes der Lager und der unterschiedlichen Anforderungen der Automobilhersteller ist es aber für die Lagerproduzenten aus fertigungsökonomischer Sicht wünschenswert, Hydrolager konstruktiv so auszulegen dass ihr Dämpfungsverhalten durch Variation der Kanalgeometrie bei der Fertigung einfach entsprechend den jeweiligen Anforderungen eingestellt werden kann.

Für Erprobungszweeke oder auch im Zusammenhang mit Tuningmaßnahmen ist es darüber hinaus von Vorteil, wenn das Dämpfungsverhalten sogar am fertigen Bauteil, also beim Einsatz des Lagers, nämlich während oder nach dessen Einbau am Fahrzeug oder einer Maschine variiert werden kann.

Es sind daher bereits Hydrolager bekannt geworden, bei denen die Kanalgeometrie mittels beweglicher, durch Aktoren betätigter Elemente variiert werden kann. Eine besondere Schwierigkeit liegt dabei darin, dass die bewegten Elemente sich in den mit Flüssigkeit gefüllten Bereichen des Lagers befinden, während die Aktoren in nicht mit Flüssigkeit gefüllten Bereichen des Lagers angeordnet sind. Dies erfordert einen erhöhten Aufwand zur Abdichtung der flüssigkeitsgefüllten Bereiche.

Aus der DE 40 41 779 A1 ist beispielsweise ein Motorlager bekannt, bei welchem die Kanalwandungen mittels eines im Lagerkörper angeordneten sowie durch einen äußeren Antrieb betätigten Kegelradcs, welches seine Bewegung wiederum auf einen Zahnkranz überträgt, zur Veränderung des Kanalquerschnitts und/oder der Kanallänge verstellt werden können. Zur Bereitstellung dieser Funktionalität weist das in der Schrift beschriebene Lager einen vergleichsweise komplizierten konstruktiven Aufbau auf.

Die JP 5-106681 A betrifft als nächstliegender Stand der Technik ein hydraulisch dämpfendes Gummilager mit veränderbarer Kanallänge, mit einem etastomcren Federelement beziehungsweise Dämpfungsglied, mindestens zwei Kammern zur Aufnahme eines fluiden Dämpfungsmittels sowie einem Kanalträger mit einem darin ausgebildeten, die Kammern strömungsleitend verbindenden und als Ringnut ausgebildeten Kanal mit Durchtrittsöffnungen zu den Kammern. In dem Kanal ist ein nicht vollständig geschlossener Schiebering verschieblich geführt.
Das aus JP 5-106681 A bekannte Gummilager weist einen komptexen Aufbau auf. Der Kanalträger ist als separates Bauteil an dem Gummilager befestigt, sodass das Lager insgesamt einen erheblichen Bauraum einnimmt.

Aufgabe der Erfindung ist es, ein hydraulisch dämpfendes Gummilager so auszubilden, dass dessen Kanallfinge, bei einem konstruktiv einfachen Aufbau des Lagers, während der Fertigung ohne Veränderung der Konstruktion an den späteren Einsatzzweck angepasst werden kann. Dabei soll das Lager zudem in einfacher Weise um die Möglichkeit zu erweitern sein, die Variation der Kanallänge auch am fertigen, gegebenenfalls bereits verbauten Bauteil zu gestatten.

Die Aufgabe wird durch ein hydraulisch dämpfendes Gummilager mit den Merkmalen des unabhängigen Patentanspruchs gelöst.
Vorteilhafte Aus- beziehungsweise Weiterbildungen des erfindungsgemäßen Gummilagers sind durch die sich anschließenden Unteransprüche gegeben.

Die Lösung besteht demnach darin, dass das erfindungsgemäße hydraulisch dämpfende Gummilager mit veränderbarer Kanallänge ein elastomeres Federelement beziehungsweise Dämpfungsglied, mindestens zwei Kammern zur Aufnahme eines fluiden Dämpfungsmittcls sowie einen Kanalträger mit einem als Ringnut ausgebildeten, die Kammern strömungsleitend verbindenden Kanal zur Zirkulation des Dämpfungsmittels umfasst. Der Kanal weist der vorgeschlagenen Lösung gemäß Durchtrittsöffnungen zu den Kammern auf. Ein Schiebering, der als nicht vollständig geschlossener Ring ausgelegt ist, ist verschieblich in dem Kanal gefiihtt, wobei seine verglichen mit der Breite der Ringnut geringere Stärke sich an seinem einen Ende unter Ausbildung einer Kanalumlenkung bis auf die Breite der Ringnut erweitert, so dass der Kanal durch den Schiebering in zwei sich zwischen dessen Enden vereinigende sowie vom Dämpfungsmittel gegenläufig durchflossene Kanalteile unterteilt isL

Eine Weiterbildung des vorgeschlagenen Hydrolagers umfasst ein elastomeres Federelement beziehungsweise Dämpfungsglied, mindestens zwei im Lagerkörper ausgebildete Kammern zur Aufnahme eines fluiden Dämpfungsmittels und einen zur Lagerachse axialsymmetrischen Kanalträgcr. Im Kanalträger ist ein Kanal ausgebildet, welcher die Kammern zur Zirkulation des Dämpfungsmittels strömungsleitend miteinander verbindet. Dieser Kanal weist Durchtrittsöffnungen zu den Kammern auf. Er ist durch eine im Kanalträger oder auf dessen Außenumfang umlaufende Ringnut gebildet. In dieser Ringnut ist ein nicht vollständig geschlossener Ring (Schiebering) verschieblich geführt. Der Schiebering besitzt auf nahezu seinem gesamten Umfang eine gegenüber der Breite der Ringnut geringere Stärke. An seinem einen Ende erweitert er sich jedoch unter Ausbildung einer Kanalumlenkung bis auf die Breite der Ringnut. Infolgedessen wird der Kanal durch den Schiebering in zwei Kanalteile unterteilt, welche sich zwischen den Enden des Schieberings vereinigen und von dem Dämpfungsmittel gegenläufig durchflossen werden. Die Realisierung einer zumindest im Zuge der Fertigung - gegebenenfalls aber auch noch nach dem Zusammenbau des Lagers (siehe hierzu die Erläuterungen weiter unten) - veränderbaren Kanallänge bei einem gleichzeitig einfachen Aufbau des Lagers wird demnach erfindungsgemäß durch die Kombination des in der Ringnut geführten Schieberings mit den positionsfesten Durchtrittsöffnungen zu den Dämpfungsmittelkammem möglich.
Entsprechend einer möglichen Ausgestaltung des erfindungsgemäßen Lagers werden die Kanalteile in ihrer Längserstreckung im Bereich der Durchtrittsöffnungen zu den Kammern durch Einengungen der den Kanal ausbildenden Ringnut begrenzt. Dabei ist der Schiebering durch diese Einengungen der Ringnut geführt.
Gemäß einer möglichen Ausbildung ist der Kanalträger als ein Hohlzylinder ausgebildet, in dessen Mantelfläche die den Kanal ausbildende Ringnut eingearbeitet ist. Die radiale äußere Begrenzung des Kanals wird in diesem Falle durch eine den Kanalträger umgebende Hülse gebildet. Eine andere mögliche Ausgestaltungsform ist dadurch gegeben, dass der Kanalträger scheibenförmig ausgebildet ist. Bei dieser Variante ist der Kanal als eine bezogen, auf die Lagergeometrie, axial in den Kanalträger eingearbeitete Ringnut ausgebildet. Die Ringnut wird axialseitig durch einen Deckel abgedeckt.
Beide vorgenannten Ausbildungsformen eignen sich zur Realisierung eines Buchsenlagers, welches aus einem zylindrischen Innenteil, einem das Innenteil umgebenden und mit ihm durch Vulkanisation verbundenen elastomeren Dämpfungsglied sowie zwei einander gegenüberliegenden Kammern besteht. Dieses Buchsenlagers ist entweder vollständig oder begrenzt auf einen Teil seiner axialen Erstreckung von dem als Hohlzylinder ausgebildeten Kanalträger umgeben oder stirnseitig von dem scheibenförmig ausgebildeten Kanalträger axial begrenzt.
Das erfinderische Prinzip lässt sich in seiner Ausbildungsform mit einem scheibenförmigen Kanalträger auch zur Realisierung eines Motorlagers einsetzen. Die zwei axial hintereinander angeordneten Kammern des Motorlagers werden in diesem Falle durch den quer zur Lagerachse in den Lagerkörper eingeordneten scheibenförmigen Kanalträger räumlich voneinander getrennt. Entsprechend einer bevorzugten Ausführungsform ist dabei der Kanalträger mehrstückig ausgebildet und besteht aus zwei zwischen sich eine Membran (Gummischeibe) einschließenden Lochscheiben. In der in eine der Lochscheiben eingearbeiteten Ringnut ist der Schiebering angeordnet, welcher bei dieser Ausbildungsform ebenfalls eine umlaufende Ringnut aufweist. Die Ringnut des Schieberings ist mit ihrer Öffnung der Ringnut in der Lochscheibe zugewandt. Wie bereits betont, beziehen sich die vorstehenden Erläuterungen zur Ausbildung eines Motorlagers auf eine bevorzugte Ausbildungsform. Es sind jedoch unter Beibehaltung des erfindungsgemäßen Prinzips im Detail andere Ausführungsformen möglich. So kann die durch die Membran beziehungsweise Gummischeibe ausgebildete Beulfeder auch in einen äußeren Ring des Lagers einvulkanisiert und dabei gegebenenfalls nicht in den Kanalträger integriert sein.

Entsprechend einer besonders vorteilhaften Weiterbildung des erfindungsgemäßen Gummilagers sind an dem Kanalträger und/oder am Schiebering vom Äußeren des Lagers her zu betätigende Aktoren angeordnet. Mittels dieser Aktoren können der Kanalträger und der Schiebering auch am fertig montierten, gegebenenfalls eingebauten Lager gegeneinander verdreht werden. Die aus der Summe der Erstreckung beider Kanalteile resultierende Gesamtkanallänge kann dadurch auch an einem bereits eingebauten Lager variabel verstellt werden.
Bei einer möglichen Ausbildungsform dieser Weiterbildung weist der Umfang des Kanalträgers und/oder des Schieberings zur variablen Einstellung der Kanallänge eine weitere Ringnut auf. In dieser zusätzlichen Ringnut läuft ein Seil, durch das der Kanalträger und der Schiebering manuell oder durch einen Antrieb gegeneinander verdreht werden können. Abweichend von dieser Ausführungsform können als Aktoren auch ein Getriebe, ein Zahnriemen oder eine andere Form des Riementriebs oder aber hydraulische beziehungsweise pneumatische Verstellglieder zur Anwendung kommen. In jedem Fall ist dabei deren einfache Kopplung mit dem Schiebering und/oder dem Kanalträger durch die mit der Erfindung vorgeschlagene Lösung in Folge der Verlagerung des Kanals in die radial äußeren Bereiche des Lagers sehr begünstigt.

Die Erfindung soll nachfolgend anhand eines Ausführungsbeispiels nochmals näher erläutert werden. In den zugehörigen Zeichnungen zeigen:
- Fig. 1:: Eine erste mögliche Ausbildung des Kanalträgers mit im Kanal eingeordnetem Schiebering
- Fig. 2:: Eine andere Ausführungsform des Kanalträgers mit Schiebering
- Fig. 3:: Ein zur Aufnahme der Kräfte an einem Lenker montiertes Buchsenlager
- Fig. 4: Das Oberteil eines Motorlagers mit den Kanalteilen
- Fig. 5:: Den mehrteilig ausgebildeten Kanalträger für das Lager gemäß Fig. 4
- Fig. 6:: Den Kanalträger gemäß Fig. 5 mit Aktoren zur Verstellung der Kanallänge

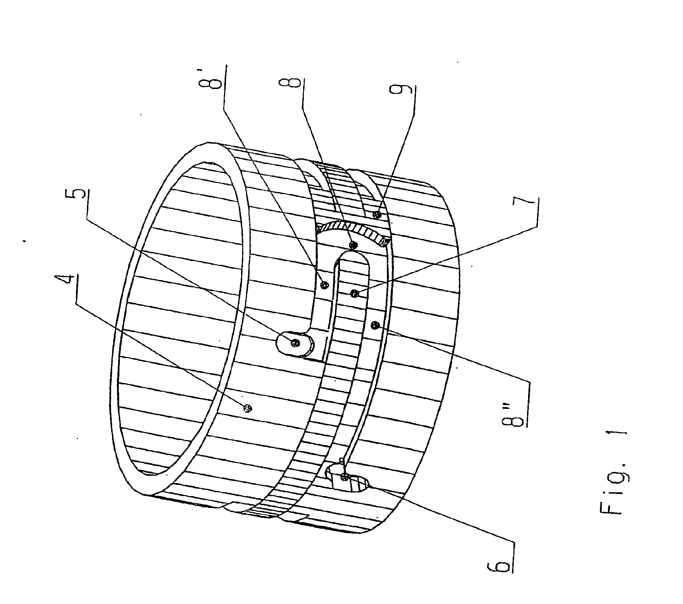

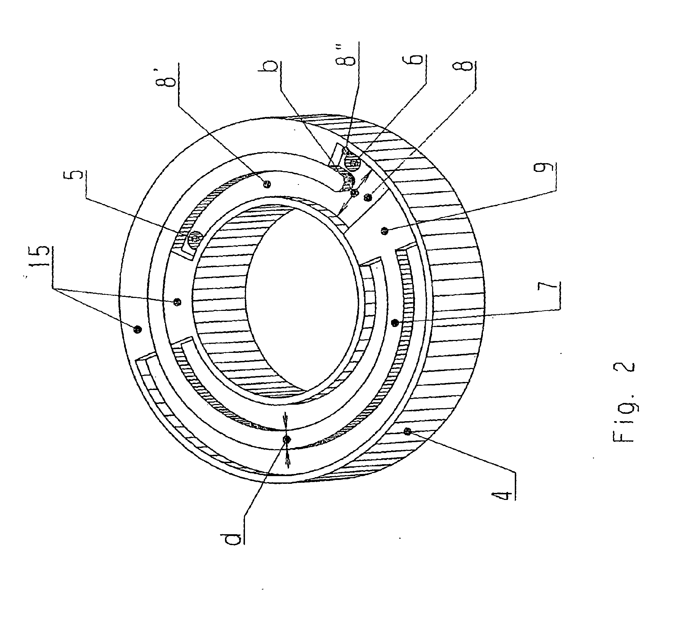

Die Fig. 1 zeigt eine mögliche Ausbildung des Kanalträgers 4 des erfindungsgemäßen Gummilagers. Es handelt sich hierbei um den Kanalträger 4 eines Buchsenlagers. Der Kanalträger 4 ist als ein Hohlzylinder ausgebildet, welcher die in dieser Fig. nicht dargestellten Komponenten (Innenteil 13 mit umgebenden elastomeren Dämpfungsglied 1 sowie Kammern 2, 3 für das Dämpfungsmittel) das Buchsenlager entlang seiner axialen Erstreckung vollständig oder auf einem axialen Abschnitt umgibt. In die Mantelfläche des Kanalträgers 4 ist erkennbar die Ringnut eingearbeitet, welche den Kanal 8 bildet. In der Ringnut mit den ortsfesten Durchtrittsöffnungen 5, 6 zu den Kammern 2, 3 ist ein Schiebering 7 geführt. Dieser Schiebering 7, welcher wie aus der Fig. 1 ersichtlich, nicht vollständig geschlossen ist, weist auf nahezu dem gesamten Umfang eine gegenüber der Breite b der Ringnut geringere Stärke d auf. An seinem einen Ende erweitert er sich jedoch bis auf die Nutbreite b. Er bildet hierdurch eine Kanalumlenkung 9 aus. Durch diese spezielle Ausbildung des Schieberings 7 wird der Kanal 8 in zwei Kanalteile 8', 8" unterteilt, welche sich zwischen den Enden des Schieberings 7 im Bereich der Kanalumlenkung 9 vereinigen. Dämpfungsmittel, welches über die Durchtrittsöffnungen 5, 6 von einer Kammer 2, 3 des in Figur 1 nicht dargestellten Lagerkörpers in die andere strömen kann, durchfließt dabei die beiden Kanalteile 8', 8" gegenläufig. Es wird sofort ersichtlich, dass durch eine Verschiebung des Schieberings 7 in der Ringnut eine Veränderung der effektiven Kanallänge möglich ist. In der dargestellten Fig. 1 würde beispielsweise eine rechtsdrehende Verschiebung des Schieberings 7 zu einer Verlängerung beider Kanalteile 8', 8" und damit zur Verlängerung der effektiven Kanallänge zwischen den Durchtrittsöffnungen 5, 6 führen. Beim Einsatz eines in dieser Weise ausgebildeten Kanalträgers 4 ist bei einem insgesamt einfachen konstruktiven Aufbau eines hydraulisch dämpfenden Buchsenlagers, zumindest im Zuge seiner Fertigung, die Kanallänge entsprechend dem vorgesehenen Einsatzzweck in einem sehr weiten Bereich variabel festlegbar. Selbstverständlich wird der Kanalträger 4, welcher, wie bereits ausgeführt, das elastomere Dämpfungsglied 1 mit den Kammern 2, 3 umgibt, seinerseits bei der Montage des Lagers zur Bildung einer den Kanal 8 begrenzenden Kanalwand von einer Hülse umgeben. Durch die nach außen verlagerte Kanalgeometrie ist dabei eine Möglichkeit gegeben, auch eine Einstellmöglichkeit für das fertige Bauteil vorzusehen. So ist es denkbar, die bereits angesprochene, den Kanalträger 8 umgebende Hülse fest mit dem Schiebering 7 zu koppeln und den Schiebering 7 durch eine Drehung der Hülse vermittels daran angeordneter Aktoren 10, 11 in der Nut zu verschieben.
Eine andere Ausbildungsform für den Kanalträger 4, welche vorzugsweise ebenfalls für den Einsatz bei Buchsenlagern vorgesehen ist, wird durch die Fig. 2 widergegeben. Hier ist der Kanalträger 4 in der Art einer Scheibe ausgebildet, deren Höhe vergleichsweise gering ist. Genauer gesagt handelt es sich um eine Lochscheibe mit einer zentralen Bohrung und einer in etwa ihrer Höhe entsprechenden Ringstärke. Die Ringnut zur Ausbildung des Kanals 8 ist bei dieser Ausgestaltungsform in die auf das axiale Ende eines Buchsenlagers aufzusetzende Scheibe von der Stirnseite her, also bezogen auf die Lagergeometrie, in axialer Richtung eingearbeitet. Dem erfinderischen Prinzip folgend ist auch hier in die Ringnut ein Schiebering 7 eingeordnet und in dieser verschieblich geführt. Im Bereich der ortsfesten, nach erfolgter Montage am Lager axial verlaufenden Durchtrittsöffnungen 5, 6 zu den Kammern 2, 3 des hier wiederum nicht dargestellten Lagerkörpers weist die den Kanal 8 ausbildende Ringnut Verengungen 15 zur Führung des Schieberings 7 auf. Diese Verengungen 15 begrenzen gleichzeitig die beiden durch den Schiebering 7 gebildeten Kanalteile 8', 8" in ihrer jeweiligen Längserstreckung. Beide Kanalteile 8', 8" vereinigen sich wie bei der Ausbildung gemäß Fig. 1 zwischen den Enden des offenen Schieberings 7, wobei dessen eines Ende die Kanalumlenkung 9 ausbildet. Die gesamte in der Fig. 2 dargestellte Anordnung wird axialseitig, also in der Abbildung von oben her durch einen (nicht dargestellten) Deckel abgedeckt. Dabei kann der Deckel gleichzeitig dazu dienen, den Schiebering 7 in der Nut zu verdrehen und auf diese Weise die Möglichkeit zu schaffen, auch am baufertigen Lager die Kanallänge, beispielsweise für Tuningmaßnalunen, veränderlich zu halten.

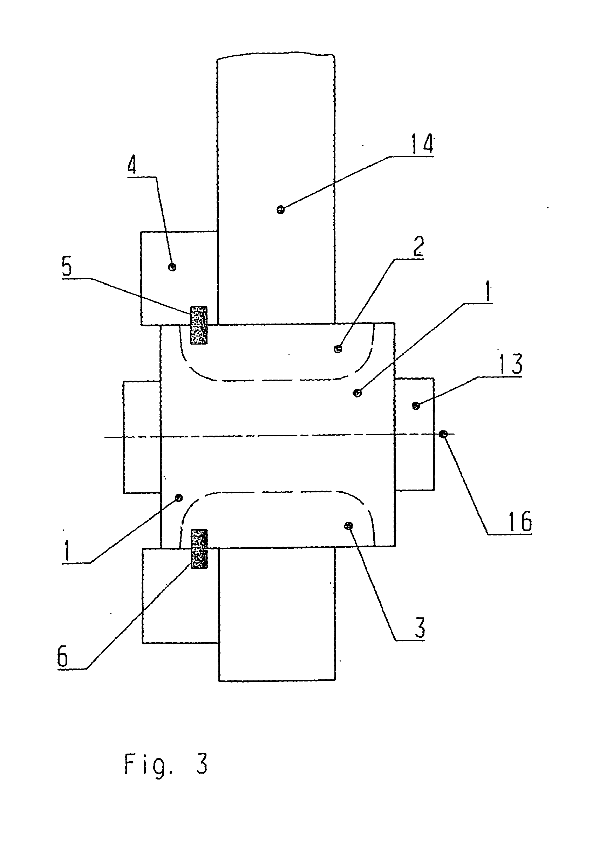

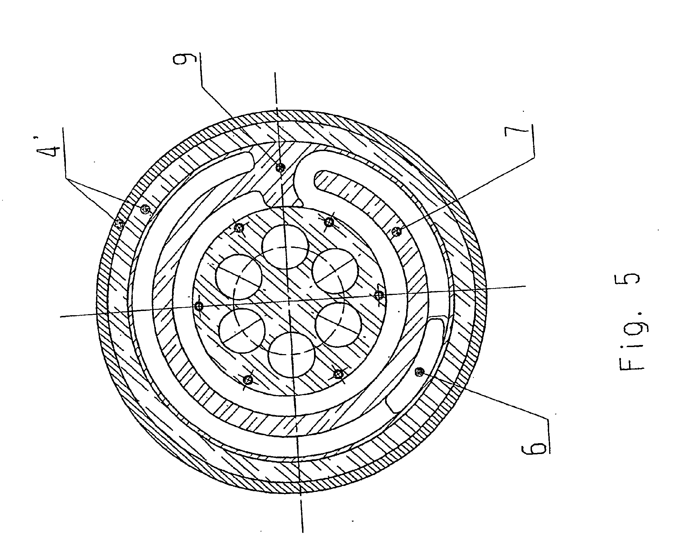

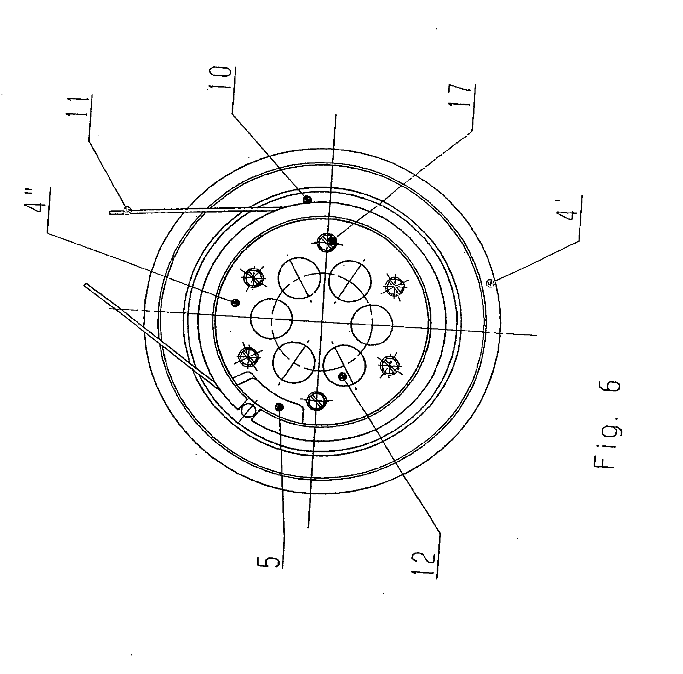

In der Fig. 3 ist ein erfindungsgemäßes Buchsenlager dargestellt, mittels welchem beispielsweise die auf den Lenker 14 eines Kraftfahrzeugs einwirkenden Kräfte gedämpft werden. Dazu ist das Lager in einem Auge des Lenkers montiert. Das Lager umfasst ein Innenteil 13, einen dieses Innenteil umgebenden sowie mit ihm durch Vulkanisation verbundenen elastomeren Lagerkörper 1 (Dämpfungsglied) mit darin eingeordneten Kammern 2, 3 sowie den Kanalträger 4, welcher vergleichbar der Fig. 1 ausgebildet ist. Der Lagerkörper wird dabei an einem axialen Ende von dem als Hohlzylinder ausgebildeten Kanalträger 4 umgeben. Entsprechend der Erfindung weist der im Kanalträger 4 ausgebildete, hier jedoch nicht sichtbare Kanal 8 zur Verbindung der Kammern 2, 3 ortsfeste (in der Fig. symbolisch angedeutete) Durchtrittsöffnungen 5, 6 auf. Mittels des im Kanal 8 angeordneten, ebenfalls nicht sichtbaren Schieberings 7 ist die Kanallänge gemäß den Erläuterungen zur Fig. 1 veränderbar.

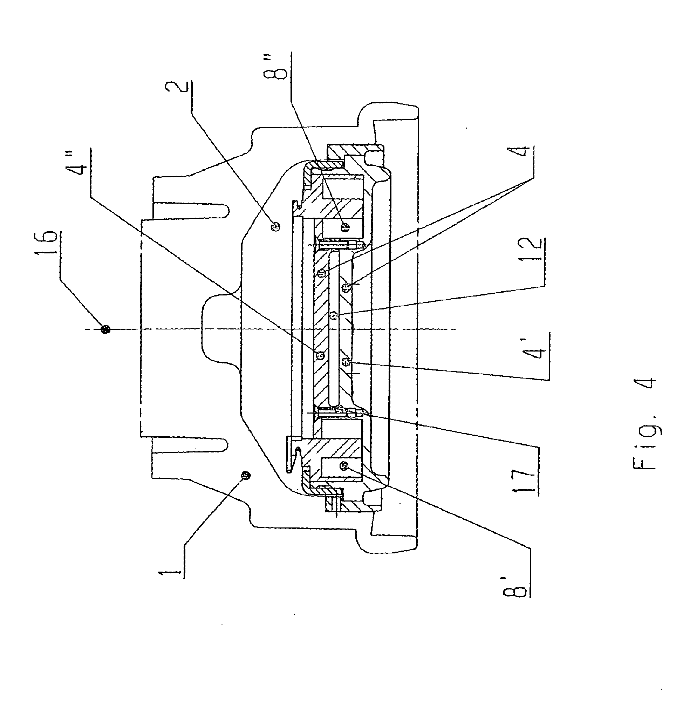

In der Fig. 4 ist das Oberteil eines Motorlagers dargestellt. In dessen elastomeren Tragkörper (Dämpfungsglied) 1 ist eine Kammer 2 zur Aufnahme eines Dämpfungsmittels eingeordnet. Nach unten hin wird das Lager durch einen in der Fig. nicht gezeigten Balg verschlossen. Zischen dem Balg und dem Kanalträger 4 ist die zweite hier nicht dargestellt Kammer 3 ausgebildet. Beide axial hintereinander angeordneten Kammern 2, 3 werden also räumlich durch den Kanalträger 4 voneinander getrennt, sind jedoch über den Kanal 8 zur Zirkulation des Dämpfungsmittels strömungsleitend miteinander verbunden. Dem Prinzip der Erfindung folgend ist auch hier der Kanal 8 in zwei gegenläufig vom Dämpfungsmittel durchströmte Kanalteile 8', 8" unterteilt.
Der Aufbau des Kanalträgers 4 wird durch die Fig. 5 und 6 verdeutlicht. Der Kanalträger 4 ist mehrstückig ausgebildet. Er besteht aus einem ersten scheibenförmigen Element 4' mit einer darin stirnseitig eingearbeiteten Ringnut und einem, in der Fig. 5 nicht dargestellten (siehe hierzu aber Fig. 6), weiteren mit dem ersten scheibenförmigen Element 4' mittels Schrauben 17 zu verbindenden zweiten Scheibenelement 4".
Die Fig. 5 zeigt eine Schnittdarstellung des Kanalträgers 4 sowie des in die Ringnut eingeordneten Schieberings 7 mit der Kanalumlenkung 9. Der Schiebering 7 ist bei dieser Ausbildung Teil eines hier ebenfalls geschnitten dargestellten massiveren Ringelements mit einer in die Darstellungsebene hinein geöffneten (nicht erkennbaren) Ringnut zur Ausbildung des eigentlichen Schieberings 7. Im zusammengebauten Zustand schließen beide als Lochscheiben ausgebildete scheibenförmigen Elemente 4', 4" eine Membran 12 zwischen sich ein. Jedes der scheibenförmigen Elemente 4', 4" weist eine positionsfeste Durchtrittsöffnung 5, 6 zu der beim zusammengebauten Lager jeweils angrenzenden Kammer 2, 3 auf. Die Lochscheiben 4', 4" weisen eine oder, wie im Beispiel, mehrere Bohrungen beziehungsweise (nicht zwingend kreisrunde) Ausnehmungen auf. Diese Ausnehmungen definieren die Nachgiebigkeit der eingeschlossenen, als Beulfeder wirkenden Membran 12 (Gummischeibe). Über diese Nachgiebigkeit kann die schwingende Flüssigkeit manipuliert werden. Im Zusammenspiel mit dem die obere Kammer 2 einfassenden Dämpfungsglied wird die erforderliche dynamische Volumenänderung realisiert. Die Nachgiebigkeit kann jedoch außer durch die hier verwendete Membran durch andere stattdessen eingesetzte Elemente, wie beispielsweise eine in einem äußeren Ring des Lagers einvulkanisierte Gummischeibe oder eine mechanische Feder, bestimmt werden. Der Kanalträger ist dann unter Beibehaltung des erfinderischen Prinzips in seiner konkreten konstruktiven Ausgestaltung entsprechend anzupassen.

In der Fig. 6 ist der Kanalträger 4 nochmals im montierten Zustand (seine scheibenförmigen Elemente 4, 4" sind durch Schrauben 17 miteinander verbunden) dargestellt. Gemäß dieser Darstellung ist das zweite scheibenförmige Element 4" unter Einfügung der Membran 12 mit dem ersten verbunden. Im zusammengebauten Zustand eines Lagers nach Fig. 4 grenzt dessen obere Kammer 2 an das Scheibenelement 4" an, während die in der Fig. 4 nicht dargestellte untere Ausgleichskammer 3 benachbart zum Scheibenelement 4' angeordnet ist. Über die Durchtrittsöffnung 5 ist die Kammer 2 strömungsleitend mit dem Kanal 8 verbunden, welcher, wie aus Fig. 5 ersichtlich, durch Verdrehen des Schieberings 7 in seiner Länge veränderbar ist. Die Einstellung der Kanallänge kann entweder im Zuge der Fertigung des Lagers erfolgen oder bei einer Ausbildung gemäß Fig. 6 sogar im baufertigen Zustand des Lagers. Im letztgenannten Fall sind zur gegenseitigen Verdrehung von Kanalträger 4 und Schiebering 7 auf dem Umfang des an die obere Kammer 3 angrenzenden scheibenförmigen Elementes 4" Aktoren 10, 11 vorgesehen. Diese werden durch eine Ringnut 10 auf dem Umfang des Elements 4` und ein darin laufendes Seil 11 gebildet. Durch Ziehen an dem in der Fig. angedeuteten Seil 11 kann das scheibenförmige Element 4" als Teil des Kanalträgers 4 gegenüber dem Schiebering 7 verdreht und damit die Kanallänge variiert werden. Je nach Einsatzfall kann die Einstellung der Kanallänge manuell oder mittels eines mit dem Seil 11 gekoppelten Antriebs erfolgen. Selbstverständlich sind auch andere Ausbildungsmöglichkeiten für die Aktoren (Getriebe, Riementrieb, Pneumatik, Hydraulik o.ä.) möglich, wobei deren Kopplung mit dem Schiebering und/oder dem Kanalträger durch das erfinderische Prinzip begünstigt wird. Insbesondere sind dabei zusätzliche Maßnahmen zur Abdichtung des Kanals oder der Kammern entbehrlich.

### Liste der verwendeten Bezugszeichen

- 1: Federelement, Dämpfungsglied
- 2: Kammer
- 3: Kammer
- 4: Kanalträger
- 4', 4": Lochscheibe beziehungsweise scheibenförmiges Element (Scheibenelement)
- 5: Durchtrittsöffnung
- 6: Durchtrittsöffnung
- 7: Schiebering
- 8: Kanal
- 8', 8": Kanalteil
- 9: Kanalumlenkung
- 10: Ringnut
- 11: Seil
- 12: Membran
- 13: Innenteil
- 14: Lenker
- 15: Einengung
- 16: Lagerachse
- 17: Schrauben

## Patentansprüche

1. Hydraulisch dämpfendes Gummilager mit veränderbarer Kanallänge, umfassend:
- ein elastomeres Federelement beziehungsweise Dämpfungsglied (1),
- mindestens zwei Kammern (2, 3) zur Aufnahme eines fluiden Dämpfungsmittels,
- einen Kanalträger (4) mit einem die Kammern (2, 3) strömungsleitend verbindenden Kanal (8) mit Durchtrittsöffnungen (5, 6) zu den Kammern (2, 3),
- einen nicht vollständig geschlossenen Schiebering (7), der verschieblich in dem Kanal (8) geführt ist,
**dadurch gekennzeichnet, dass** der Kanal (8) als Ringnut ausgebildet ist
und die gegenüber der Breite (b) der Ringnut geringere Stärke (d) des Schieberinges (7) sich an seinem einen Ende unter Ausbildung einer Kanalumlenkung (9) bis auf die Breite (b) der Ringnut erweitert, so dass der Kanal (8) durch den Schiebering (7) in zwei sich zwischen dessen Enden vereinigende Kanalteite (8', 8") unterteilt ist.

2. Hydraulisch dämpfendes Gummilager nach Anspruch 1,
**dadurch gekennzeichnet, dass**
die Kammern (2, 3) im Lagerkörper ausgebildet sind, dass der Kanalträger (4) zur Lagerachse (16) axialsymmetrisch angeordnet ist, dass der Kanal (8) mit positionsfesten Durchtrittsöffnungen (5, 6) zu den Kammern (2, 3) gebildet ist und dass der Schiebering (7) nahezu auf dem gesamten Umfang eine gegenüber der Breite (b) der Ringnut geringere Stärke (d) aufweist.

3. Hydraulisch dämpfendes Gummilager nach Anspruch 1 oder 2,
**dadurch gekennzeichnet, dass**
die Kanalteile (8', 8") in ihrer Längserstreckung im Bereich der Durchtrittsöffnungen (5, 6') durch Einengungen (15) der den Kanal (8) ausbildenden Ringnut begrenzt werden und der Schiebering (7) durch diese Einengungen (15) in der Ringnut geführt ist.

4. Hydraulisch dämpfendes Gummilager nach einem der Ansprüche 1 bis 3,
**dadurch gekennzeichnet, dass**
der Kanalträger (4) als ein Hohlzylinder ausgebildet und die den Kanal (8) ausbildende Ringnut in die Mantelfläche dieses Holzylinders eingearbeitet ist, welche von einer Hülse umgeben ist.

5. Hydraulisch dämpfendes Gummilager nach einem der Ansprüche 1 bis 3,
**dadurch gekennzeichnet, dass**
der Kanalträger (4) scheibenförmig und der Kanal (8) als eine, bezogen auf die Lagergeometrie, axial in den Kanalträger (4) eingearbeitete sowie von einem Deckel abgedeckte Ringnut ausbildet ist.

6. Hydraulisch dämpfendes Gummilager nach Anspruch 4 oder 5,
**dadurch gekennzeichnet, dass**
es sich bei dem Lager um ein Buchsenlager mit einem im wesentlichen zylindrischen Innenteil (13), einem das Innenteil (13) umgebenden und mit ihm durch Vulkanisation verbundenen elastomeren Dämpfungsglied (1) sowie zwei einander radial gegenüberliegenden in dem elastomeren Dämpfungsglied (1) ausgebildeten Kammern (2, 3) handelt.

7. Hydraulisch dämpfendes Gummilager nach Anspruch 6,
**dadurch gekennzeichnet, dass**
das elastomere Dämpfungsglied (1) vollständig oder in einem Abschnitt seiner axialen Erstreckung von dem Kanalträger (4) mit der diesen umschließenden Hülse umgeben ist, wobei die Durchtrittsöfthungcn (5, 6) zwischen dem Kanal (8) und den Kammern (2, 3) radial verlaufen.

8. Hydraulisch dämpfendes Gummilager nach Anspruch 6,
**dadurch gekennzeichnet, dass**
der Kanalträger (4) mit dem Deckel axial stirnseitig des elastomeren Dämpfungsgliedes (1) angeordnet ist, wobei die Durchtrittsöffnungen (5, 6) zwischen dem Kanal (8) und den Kammern (2, 3) axial verlaufen.

9. Hydraulisch dämpfendes Gummilager nach Anspruch 5,
**dadurch gekennzeichnet, dass**
es sich bei dem Lager um ein Motorlager mit zwei axial hintereinander angeordneten Kammern (2, 3) handelt, welche durch den quer zur Lagerachse (16) in den Lagerkörper eingeordneten Kanalträger (4) räumlich voneinander getrennt sind, wobei der Kanalträger (4) mehrstückig ausgebildet ist und zwei zwischen sich eine Membran (12) einschließende Lochscheiben (4', 4") umfasst und wobei der in den Kanal (8) eingeordnete Schiebering (7) ebenfalls eine umlaufende Ringnut aufweist, deren Öffnung der in einer der Lochscheiben (4', 4") zur Ausbildung des Kanals (8) eingearbeiteten Ringnut zugewandt ist.

10. Hydraulisch dämpfendes Gummilager nach einem der Ansprüche 1 bis 9,
**dadurch gekennzeichnet, dass**
an dem Kanatträger (4) und/oder am Schiebering (7) vom Lageräußeren her zu betätigende Aktoren (10, 11) angeordnet sind, mittels welcher der Kanalträger (4) und der Schiebering (7) gegeneinander verdrehbar sind, so dass die aus der Summe der Erstreckung beider Kanalteile (8', 8") resultierende Kanallänge auch an dem entsprechend seines Einsatzzweckes verbauten Lager variabel einstellbar ist.

11. Hydraulisch dämpfendes Gummilager nach Anspruch 10,
**dadurch gekennzeichnet, dass**
zur variablen Einstellung der Kanallänge auf dem Umfang des Kanalträgers (4) tmd/oder des Schieberings (7) eine weitere Ringnut (10) eingearbeitet ist, in der ein Seil (11) läuft, mittels welchem der Kanalträger (4) und der Schiebering (7) gegeneinander verdrehbar sind.

## Claims

1. Hydraulically damping rubber mount with a variable passage length, comprising:
- an elastomeric spring element or damping member (1),
- at least two chambers (2, 3) for accommodating a liquid damping medium,
- a passage carrier (4) with a passage (8) connecting the chambers (2, 3) to establish a flow connection and incorporating passage openings (5, 6) into the chambers (2, 3),
- a sliding ring (7) that is not fully closed and is displaceably guided in the passage (8),
**characterised in that**
the passage (8) is provided in the form of an annular groove and the thickness (d) of the sliding ring (7), which is slimmer than the width (b) of the annular groove, becomes wider reaching the width (b) of the annular groove at its one end forming a passage deflection (9), so that the passage (8) is sub-divided by the sliding ring (7) into two passage parts (8', 8") which merge between its ends.

2. Hydraulically damping rubber mount as claimed in claim 1,
**characterised in that**
the chambers (2, 3) are provided in the mounting body, the passage carrier (4) is disposed axially symmetrical with respect to the mount axis (16), the passage (8) is provided with passage openings (5, 6), of a fixed position, into the chambers (2, 3) and the sliding ring (7) has a thickness (d) that is slimmer than the width (b) of the annular groove across virtually the entire circumference.

3. Hydraulically damping rubber mount as claimed in claim 1 or 2,
**characterised in that**
the passage parts (8', 8") are bounded in their longitudinal extension by narrow regions (15) in the region of the passage openings (5, 6') in the annular groove forming the passage (8) and the sliding ring (7) is guided in the annular groove by means of these narrow regions (15).

4. Hydraulically damping rubber mount as claimed in one of claims 1 to 3,
**characterised in that**
the passage carrier (4) is provided in the form of a hollow cylinder and the annular groove forming the passage (8) is recessed into the external surface of this hollow cylinder, which is surrounded by a sleeve.

5. Hydraulically damping rubber mount as claimed in one of claims 1 to 3,
**characterised in that**
the passage carrier (4) is disc-shaped and the passage (8) is provided in the form of an annular groove recessed into the passage carrier (4) axially by reference to the mount geometry and is covered by a cover.

6. Hydraulically damping rubber mount as claimed in claim 4 or 5,
**characterised in that**
the mount is a bush mount with an essentially cylindrical inner part (13), an elastomeric damping member (1) surrounding the inner part (13) and joined to it by vulcanisation, as well as two chambers (2, 3) lying radially opposite one another in the elastomeric damping member (1).

7. Hydraulically damping rubber mount as claimed in claim 6,
**characterised in that**
the elastomeric damping member (1) is surrounded by the passage carrier (4) incorporating the sleeve enclosing it, completely or in one section of its axial extension, and the passage openings (5, 6) extend radially between the passage (8) and the chambers (2, 3).

8. Hydraulically damping rubber mount as claimed in claim 6,
**characterised in that**
the passage carrier (4) is disposed with the cover axially on the end face of the elastomeric damping member (1) and the passage openings (5, 6) extend axially between the passage (8) and the chambers (2, 3).

9. Hydraulically damping rubber mount as claimed in claim 5,
**characterised in that**
the mount is an engine mount with two chambers (2, 3) disposed axially one after the other, which are spatially separated from one another by means of the passage carrier (4) disposed in the mounting body transversely to the mount axis (16), which passage carrier (4) is made up of several pieces and comprises two perforated discs (4', 4") enclosing a membrane (12), and the sliding ring (7) disposed in the passage (8) also has a circumferential annular groove, the opening of which faces the annular groove recessed into one of the perforated discs (4', 4") in order to form the passage (8).

10. Hydraulically damping rubber mount as claimed in one of claims 1 to 9,
**characterised in that**
actuators (10, 11) operated from the mount exterior are provided on the passage carrier (4) and/or on the sliding ring (7), by means of which the passage carrier (4) and the sliding ring (7) are rotatable relative to one another so that the passage length resulting from the sum of the extension of the two passage parts (8', 8") can be variably adjusted, even when the mount is assembled for its intended purpose.

11. Hydraulically damping rubber mount as claimed in claim 10,
**characterised in that**
in order to adjust the passage length variably, another annular groove (10) is provided on the circumference of the passage carrier (4) and/or the sliding ring (7), in which a cable (11) runs, by means of which the passage carrier (4) and the sliding ring (7) can be rotated relative to one another.

## Revendications

1. Palier d'amortissement hydraulique en caoutchouc à longueur de canal variable, comprenant
- un élément élastique ou élément d'amortissement en élastomère (1),
- au moins deux compartiments (2, 3) destinés à recevoir un agent d'amortissement fluide,
- un support de canal (4) comportant un canal (8) reliant les compartiments (2, 3) de manière à conduire le flux par des ouvertures de passage (5, 6) vers les compartiments (2, 3),
- un anneau coulissant non entièrement fermé (7) qui est guidé de manière mobile dans le canal (8),
**caractérisé en ce que** le canal (8) est conçu sous la forme d'une rainure annulaire, et **en ce que** l'épaisseur (d) de l'anneau coulissant (7) réduite par rapport à la largeur (b) de la rainure annulaire augmente à une de ses extrémités jusqu'à atteindre la largeur (b) de la rainure annulaire en formant une déviation de canal (9), de sorte que le canal (8) est divisé par l'anneau coulissant (7) en deux parties de canal (8', 8") se rejoignant entre ses extrémités.

2. Palier d'amortissement hydraulique en caoutchouc selon la revendication 1, **caractérisé en ce que** les compartiments (2, 3) sont formés dans le corps de palier; **en ce que** le support de palier (4) est disposé en symétrie axiale par rapport à l'axe de palier (16), **en ce que** le canal (8) est conçu pour comporter des ouvertures de passage (5, 6) en position fixe vers les compartiments (2, 3) et **en ce que** l'anneau coulissant (7) présente presque sur la totalité de sa circonférence une épaisseur (d) réduite par rapport à la largeur (b) de la rainure annulaire.

3. Palier d'amortissement hydraulique en caoutchouc selon la revendication 1 ou 2, **caractérisé en ce que** les parties de canal (8', 8") sont limitées quant à leur étendue longitudinale dans la zone des ouvertures de passage (5, 6) par des rétrécissements (15) de la rainure annulaire formant le canal (8) et **en ce que** l'anneau coulissant (7) est guidé par ces rétrécissements (15).

4. Palier d'amortissement hydraulique en caoutchouc selon une des revendications 1 à 3, **caractérisé en ce que** le support de canal (4) est conçu sous la forme d'un cylindre creux, et **en ce que** la rainure annulaire formant le canal (8) est creusée sur la surface extérieure de ce cylindre creux qui est entouré d'un manchon.

5. Palier d'amortissement hydraulique en caoutchouc selon une des revendications 1 à 3, **caractérisé en ce que** le support de canal (4) est conçu en forme de disque et **en ce que** le canal (8) est conçu sous la forme d'une rainure annulaire creusée dans le support de canal (4) radialement par rapport à la géométrie du palier et recouverte d'un couvercle.

6. Palier d'amortissement hydraulique selon la revendication 4 ou 5, **caractérisé en ce que** le palier est un palier à douille comportant une partie intérieure (13) sensiblement cylindrique, un organe d'amortissement en élastomère (1) entourant la partie intérieure (13) et assemblée à celle-ci par vulcanisation, ainsi que deux compartiments (2, 3) opposés l'un à l'autre dans le sens radial dans l'organe d'amortissement (1).

7. Palier d'amortissement hydraulique en caoutchouc selon la revendication 6, **caractérisé en ce que** l'organe d'amortissement en élastomère (1) est entouré entièrement ou sur une partie de son étendue axiale par le support de canal (4) et le manchon qui enveloppe ce dernier, les ouvertures de passage (5, 6) passant radialement entre le canal (8) et les compartiments (2, 3).

8. Palier d'amortissement hydraulique en caoutchouc selon la revendication 6, **caractérisé en ce que** le support de canal (4) est disposé axialement sur la face avant de l'organe d'amortissement en élastomère (1), les ouvertures de passage (5, 6) passant en sens axial entre le canal (8) et les compartiments (2, 3).

9. Palier d'amortissement hydraulique en caoutchouc selon la revendication 5, **caractérisé en ce que** le palier est un palier de moteur comportant deux compartiments (2, 3) disposés l'un derrière l'autre dans le sens axial, qui sont séparés l'un de l'autre transversalement à l'axe du palier (16) dans l'espace par le support de canal (4) disposé dans le corps de palier, le support de palier (4) étant conçu en plusieurs pièces et comprenant deux disques perforés (4', 4") enserrant entre eux une membrane (12), et l'anneau coulissant (7) disposé dans le canal (8) présentant également une rainure annulaire circulaire dont l'ouverture est tournée vers la rainure annulaire creusée dans un des disques perforés (4', 4") pour former le canal (8).

10. Palier d'amortissement hydraulique en caoutchouc selon une des revendications 1 à 9, **caractérisé en ce que**, sur le support de canal (4) et/ou l'anneau coulissant (7), sont montés des actionneurs (10, 11) destinés à être commandés à partir de l'extérieur du palier, au moyen desquels il est possible de faire tourner le support de canal (4) et l'anneau coulissant (7) l'un par rapport à l'autre, de sorte que la longueur de canal résultant de la somme de l'étendue des deux parties de canal (8', 8") peut être ajustée de façon variable même sur le palier installé en fonction de l'utilisation envisagée.

11. Palier d'amortissement hydraulique selon la revendication 10, **caractérisé en ce que**, pour l'ajustement variable de la longueur de canal, sur la circonférence du support de canal (4) et/ou de l'anneau coulissant (7) est creusée une autre rainure annulaire (10) dans laquelle passe un câble (11) au moyen duquel on peut faire tourner le support de canal (4) et l'anneau coulissant (7) l'un par rapport à l'autre.
